# EUROPEAN PATENT SPECIFICATION

(11) **EP 2 772 862 B1**
(45) Date of publication and mention of the grant of the patent: **20.12.2017**
(21) Application number: 13157309.9
(22) Date of filing: 28.02.2013
(51) Int. Cl.: G06F 11/30, G06N 99/00, H04W 52/02, G06F 1/32

(54) **Electrical current estimation for electronic devices**
Stromverbrauchsschätzung für elektronische Vorrichtungen
Estimation d'utilisation de courant pour dispositifs électroniques

(43) Date of publication of application: 03.09.2014
(73) Proprietor: BlackBerry Limited, Waterloo, ON N2K 0A7 (CA)
(72) Inventor: Oka, Anand Ravindra, Redmond, WA 98052 (US); Simmons, Sean Bartholomew, Waterloo, Ontario N2L 3W8 (CA); Snow, Christopher Harris, Santa Clara, CA 95054 (US)
(74) Representative: Hanna Moore + Curley

(56) References cited:
- WO-A1-2010/058352
- US-A1- 2011 213 997
- US-A1- 2012 180 126
- ABHINAV PATHAK ET AL: "Fine-grained power modeling for smartphones using system call tracing", EUROSYS'11 : PROCEEDINGS OF THE EUROSYS 2011 CONFERENCE ; APRIL 10 - APRIL 13, 2011, SALZBURG, AUSTRIA, ACM, NEW YORK, NY, 10 April 2011 (2011-04-10), pages 153-168, XP058000567, DOI: 10.1145/1966445.1966460 ISBN: 978-1-4503-0634-8

## Description

### FIELD

The various embodiments described herein generally relate to a system and method for power management of an electronic device.

### BACKGROUND

Power management of electronic devices such as desktop computers, laptops, smart phones and tablets, is a concern since the power supply for such electronic devices may be limited. For example, battery life of an electronic device may be a factor that contributes to device functionality and customer satisfaction. In the case of portable electronic devices, which are typically powered by batteries that are constrained by size and weight, the energy efficiency of such devices may be a factor in allowing for longer use of the device before the batteries need to be recharged, which in turn affects the user experience and satisfaction.

Document US2012/0180126 discloses a method for estimating power consumption of an electronic device based on a power estimation model generated optionally by a machine learning procedure. The model determines the relationships between user tasks events and the device electrical current consumption.

### SUMMARY OF THE EMBODIMENTS

Accordingly there is provided a method, an electronic device and computer readable medium as detailed in the claims that follow.

### BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and in which:
FIG. 1 is a block diagram of an example embodiment of an illustrative mobile device;
FIG. 2 is a block diagram of an example embodiment of a communication subsystem component of the mobile device of FIG. 1;
FIG. 3 is a block diagram of a node of a wireless network in one example embodiment;
FIG. 4 is a block diagram showing an example embodiment of data inputs that are used by a training module and a current usage module and the data outputs that are produced by the modules;
FIG. 5 is a flowchart illustrating an example embodiment of a method of obtaining a training dataset for use with the current usage module;
FIG. 6 is a flowchart illustrating an example embodiment of a current usage estimation method;
FIG. 7 is an example of a KEV-current-log;
FIG. 8 is an example of a bag-of-word array with different weights for a raw digest;
FIG. 9 shows an example of a signature from a mapping of the bag-of-word array of FIG. 8;
FIG. 10A shows current drawn during a training phase comprising web browsing activity for about 40 seconds; and
FIG. 10B shows actual and estimated current drawn during a test phase comprising different web browsing activity for about 40 seconds.

### DETAILED DESCRIPTION OF THE EMBODIMENTS

Various apparatuses or processes will be described below to provide an example of one or more embodiments of the concepts. No embodiment described below limits any of the claims and any of the claims may cover processes or apparatuses that differ from those described below. The claims are not limited to apparatuses or processes having all of the features of any one apparatus or process described below or to features common to multiple or all of the apparatuses or processes described below. It is possible that an apparatus or process described below is not an embodiment that is recited in any of the claims. Any concept disclosed in an apparatus or process described below that is not claimed in this document may be the subject matter of another protective instrument, for example, a continuing patent application, and the applicants, inventors or owners do not intend to abandon, disclaim or dedicate to the public any such concept by its disclosure in this document.

Furthermore, it will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It should also be noted that the term coupled as used herein can have several different meanings depending in the context in which the term is used. For example, the term coupling can have a mechanical or electrical connotation depending on the context in which it is used; i.e. whether describing a physical layout or transmission of current or voltages as the case may be. For example, depending on the context, the term coupling indicates that two elements or devices can be physically or electrically connected to one another or connected to one another through one or more intermediate elements or devices via a physical or electrical element such as, but not limited to a wire, a non-active circuit element (e.g. resistor) and the like, for example.

It should be noted that terms of degree such as "substantially", "about", "approximate" and "approximately" as used herein mean a reasonable amount of deviation of the modified term such that the end result is not significantly changed. These terms of degree can be construed as including a deviation of up to ±10% of the modified term if this deviation would not negate the meaning of the term it modifies. Also, as used herein, elements may be described as "configured to" or "adapted to" perform one or more functions. In general, an element that is configured to or adapted to perform a function is suitable for performing the function, or is operable to perform the function, or is otherwise capable of performing the function. Further, the word "current" may be used herein to mean "electrical current" (a quantity measured in units of amperes), although there may be instances in which the term refers to events occurring contemporarily or presently; the meaning in a particular instance is generally clear from context.

Furthermore, in the following passages, different aspects of the embodiments are defined in more detail. Each aspect so defined may be combined with any other aspect or aspects unless clearly indicated to the contrary. In particular, any feature indicated as being preferred or advantageous may be combined with at least one other feature or features indicated as being preferred or advantageous. A feature or component that may be preferred or advantageous is not necessarily essential.

In order to intelligently choose a power management strategy to reduce power usage or consumption, and therefore conserve power and extend battery life, it is generally beneficial to have insight regarding which activities are the dominant causes of power drain in an electronic device. That is, it is useful to be able to estimate the power consumption caused by a variety of user activities on an electronic device. Since the user activities are generally associated with one or more software applications, the task is thus to estimate, with a good degree of accuracy, how much power is likely consumed by the various software applications on an electronic device in a typical run. Described below are concepts in which the power being consumed by the various software applications can be estimated by observing consumption of electric current.

The detailed description begins with a general description of a mobile device and then proceeds to describe example embodiments of a method that can be used with an electronic device for estimating or predicting current usage, and therefore power usage, based on an analysis of log data.

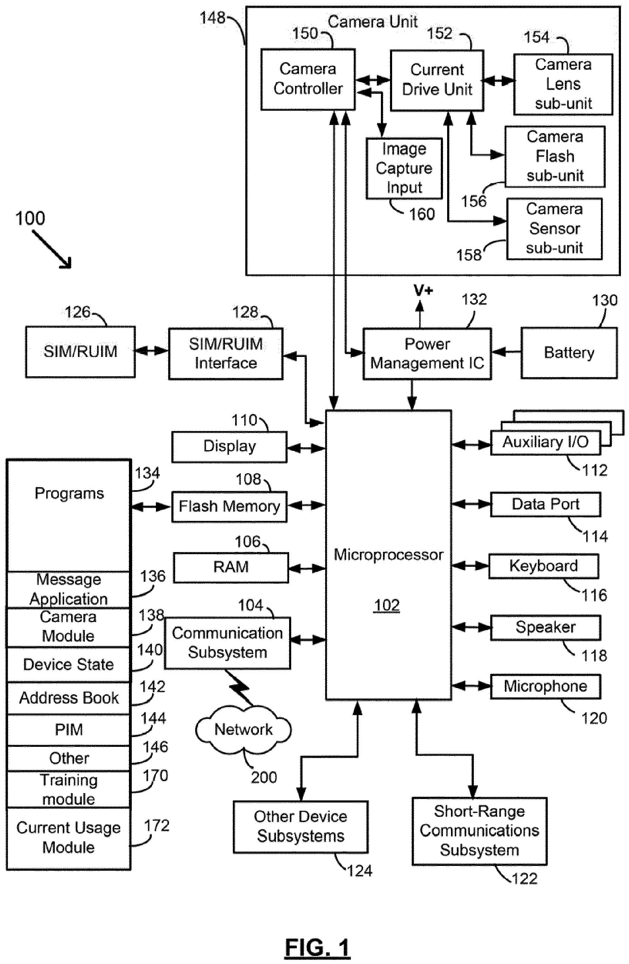

To aid the reader in understanding the structure of the mobile device, reference will be made to FIGS. 1 to 3. However, it should be understood that the embodiments described herein are not limited to a mobile device but can be extended to any electronic device that would benefit from current usage estimation as well as current usage prediction. Generally speaking mobile devices are portable, that is, readily movable from place to place. Such devices may be handheld, that is, sized and shaped to be held or carried in a human hand. Examples of such electronic devices generally include cellular phones, cellular smart-phones, wireless organizers, personal digital assistants, computers, laptops, wireless communication devices, wireless enabled notebook computers, tablet computers or e-readers, electronic security devices, media players, wireless Internet appliances and other electronic devices. Many electronic devices listed herein are portable or mobile and may have a portable power supply, which stores a limited amount of power and that supplies that power to its electronic components. For purposes of illustration, the power supply may be represented as a battery, which may be rechargeable or user-replaceable or both. Battery-powered electronic devices may have limited processing power, in which case, predicting power usage can be very helpful, including being able to identify processes or applications that require or consume a large amount of power.

Referring now to FIG. 1, shown therein is a block diagram of an example embodiment of an illustrative mobile device 100. The mobile device 100 comprises a number of components, the controlling component being a processor, embodied as a microprocessor 102, which controls the overall operation of the mobile device 100. Communication functions, including data and voice communications, are performed through a communication subsystem 104. The communication subsystem 104 receives messages from and sends messages to a wireless network 200. In this example, the communication subsystem 104 is configured in accordance with the Global System for Mobile Communication (GSM) and General Packet Radio Services (GPRS) standards. In other embodiments, the communication subsystem 104 can be configured in accordance with other communication standards as described below. New standards are still being defined, but it is believed that they will have similarities to the network behavior described herein, and it will also be understood by persons skilled in the art that the various embodiments described herein should be able to be adapted to work with any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit-switched voice communications and packet-switched data communications.

Although the wireless network 200 associated with the mobile device 100 is a GSM/GPRS wireless network in this example, the mobile device 100 can be adapted to use other wireless networks in variant embodiments. For example, the different types of wireless networks that can be employed include, but are not limited to, data-centric wireless networks, voice-centric wireless networks, and dual-mode networks that can support both voice and data communications over the same physical base stations. Examples of networks also include, but are not limited to, Code Division Multiple Access (CDMA), CDMA2000 networks, GSM/GPRS networks, 3G networks like EDGE, W-CDMA and UMTS, 4G/LTE networks and future technologies such as 5G networks. Some other examples of data-centric networks include WiFi 802.11, Mobitex™ and DataTAC™ network communication systems. Examples of voice-centric data networks include Personal Communication Systems (PCS) networks like GSM and Time Division Multiple Access (TDMA) systems. Examples of communication protocols/standards that the mobile device 100 can be adapted to be used with include, but are not limited to, 3GPP and 3GPP2, High-Speed Packet Access (HSPA) standards such as High-Speed Downlink Packet Access (HSDPA), 3GPP LTE, LTE, LTE Advanced, WiMax, and Flash-OFDM.

The microprocessor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications subsystem 122 and other device subsystems 124.

Some of the subsystems of the mobile device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list. Operating system software used by the microprocessor 102 is typically stored in a persistent store such as the flash memory 108, which can alternatively be a read-only memory (ROM) or similar storage element (not shown). Those skilled in the art will appreciate that the operating system, specific device applications, or parts thereof, can be temporarily loaded into a volatile store such as the RAM 106.

The mobile device 100 can send and receive communication signals over the wireless network 200 after network registration or activation procedures have been completed. Network access is associated with a subscriber or user of the mobile device 100. To identify a subscriber, the mobile device 100 may use a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services can include: web browsing and messaging such as e-mail, voice mail, SMS, and MMS. More advanced services can include: point of sale, field service and sales force automation. The SIM card/RUIM 126 includes a processor and memory for storing information. Once the SIM card/RUIM 126 is inserted into the SIM/RUIM interface 128, it is coupled to the microprocessor 102. In order to identify the subscriber, the SIM card/RUIM 126 contains some user parameters such as an International Mobile Subscriber Identity (IMSI). An advantage of using the SIM card/RUIM 126 is that a subscriber is not necessarily bound by any single physical mobile device. The SIM card/RUIM 126 can store additional subscriber information for a mobile device as well, including datebook (or calendar) information and recent call information. Alternatively, user identification information can also be programmed into the flash memory 108.

The mobile device 100 includes a power supply. In the illustrative device of FIG. 1, the mobile device 100 is a battery-powered device and includes a power management IC 132 that provides a battery interface to the one or more rechargeable batteries in a battery unit 130 and manages how power is drawn from the battery 130 and used by the mobile device 100. The power management IC 132 is coupled to a regulator (not shown), which assists the battery unit 130 in providing power V+ to the mobile device 100. Alternatively, the battery unit 130 can be a smart battery as is known in the art. Smart batteries generally include a battery processor, battery memory, switching and protection circuitry, measurement circuitry and a battery pack that includes one or more batteries, which are generally rechargeable. In either case, the one or more batteries in the battery unit 130 can be made from lithium, nickel-cadmium, lithium-ion, or other suitable composite material.

The microprocessor 102, in addition to its operating system functions, enables execution of software applications 134 on the mobile device 100. The subset of software applications 134 that control basic device operations, including data and voice communication applications, will normally be installed on the mobile device 100 during its manufacture. When the microprocessor 102 is executing any of the software applications 134, the microprocessor 102 can be considered to be configured to execute a number of steps according to the methods specified by the code of the software applications 134.

The software applications 134 include a message application 136 that can be any suitable software program that allows a user of the mobile device 100 to send and receive electronic messages. Various alternatives exist for the message application 136 as is well known to those skilled in the art. Messages that have been sent or received by the user are typically stored in the flash memory 108 of the mobile device 100 or some other suitable storage element in the mobile device 100. In an alternative embodiment, some of the sent and received messages can be stored remotely from the device 100 such as in a data store of an associated host system that the mobile device 100 communicates with. For instance, in some cases, only recent messages can be stored within the device 100 while the older messages can be stored in a remote location such as the data store associated with a message server. This can occur when the internal memory of the device 100 is full or when messages have reached a certain "age", i.e. messages older than 3 months can be stored at a remote location. In an alternative embodiment, all messages can be stored in a remote location while only recent messages can be stored on the mobile device 100.

The mobile device 100 further includes a camera module 138, a device state module 140, an address book 142, a Personal Information Manager (PIM) 144, and other modules 146. The camera module 138 is used to control the camera operation for the mobile device 100, which includes obtaining raw thumbnail image data associated with images taken by the mobile device 100, preprocessing the raw thumbnail image data, and displaying the processed thumbnail image data on the display 110.

The device state module 140 provides persistence, i.e. the device state module 140 ensures that important device data is stored in persistent memory, such as the flash memory 108, so that the data is not lost when the mobile device 100 is turned off or loses power. The address book 142 provides information for a list of contacts for the user. For a given contact in the address book 142, the information can include the name, phone number, work address and email address of the contact, among other information. The other modules 146 can include a configuration module (not shown) as well as other modules that can be used in conjunction with the SIM/RUIM interface 128.

The PIM 144 has functionality for organizing and managing data items of interest to a subscriber, such as, but not limited to, e-mail, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items that are stored or associated or stored and associated with a host computer system. This functionality creates a mirrored host computer on the mobile device 100 with respect to such items. This can be particularly advantageous when the host computer system is the mobile device subscriber's office computer system.

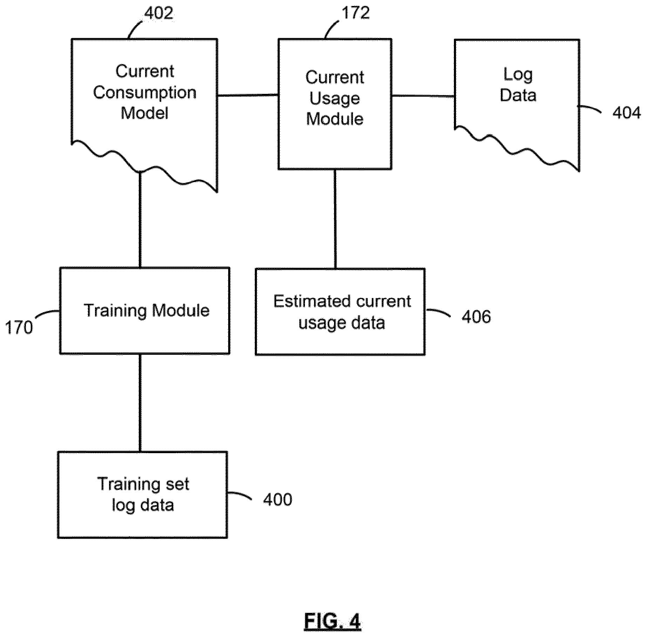

The mobile device 100 further includes a training module 170 and a current usage module 172. The training module 170 can be executed in the initial training phase to generate a current consumption model, which may then be accessed and used to estimate or predict current consumption on the mobile device 100. This can be achieved by the current usage module 172, which may be used to provide real-time, on-demand estimation of current usage or a prediction of future current usage of one or more of various user activities, software applications, services and systems on a device. In other cases, the current usage module 172 may also be used by application developers or software developers to estimate the amount of current consumption that will occur when an application or software program that is being written is executed. This then allows application developers and software programmers to modify their code as they are writing it to meet certain current consumption requirements, guidelines or goals. The example embodiments and operation of the training module 170 and the current usage module 172 as well as the various uses of these modules and their benefits are described in further detail with regards to FIGS. 4-9 below.

It should be noted that current consumption is related to power consumption. For example, the power consumed by a phone, in Watts, is directly proportional to the current drawn, the constant of proportionality being the operating voltage. The capacity of the battery is in principle denoted in Joules (units of energy) and the consumed capacity is calculated by integrating the power consumed with respect to time.

It is reasonable to assume that the output voltage of the battery used by a phone is a constant from the fully charged state to the almost empty state (typically 3.6 Volts). In practice, the operating voltage tends to droop slightly with time as the battery discharges and develops significant internal electrical resistance across which some potential drop occurs. However, this phenomenon is negligible in the overall battery lifetime calculations. Since it is common to denote battery capacity in milli-Ampere-Hours, which are units of charge (not energy), the consumed portion of this capacity can be simply estimated by integrating the current consumption with respect to time. In other words, the battery is a charge storage device and current is the average charge used per unit time. Converting between the two: 1mA-hr = 3.6 J / V. Therefore, for a 3.6 V battery, 1mA-hr = 3.6 J/V * 3.6 V which is approximately 13 J of energy. For a 3.6 V, 1800 mA-hr battery this corresponds to approximately 24,000 J of stored energy from which the current is drawn and power is consumed.

Additional applications can also be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and can provide enhanced on-device functions, communication-related functions, or both. For example, secure communication applications can enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path can, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the mobile device 100.

The short-range communications subsystem 122 provides for communication between the mobile device 100 and different systems or devices, without the use of the wireless network 200. For example, the subsystem 122 can include an infrared device and associated circuits and components for short-range communication. Examples of short-range communication include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the microprocessor 102. The microprocessor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as a touch screen, mouse, track ball, track pad, infrared fingerprint detector, or a roller wheel with dynamic button pressing capability. The keyboard 116 may be an alphanumeric keyboard or a telephone-type keypad or both an alphanumeric and telephone-type keypad. However, other types of keyboards, such as a virtual keyboard implemented with a touch screen, can also be used. A composed item can be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

The mobile device 100 also includes a camera unit 148 that allows a user of the mobile device 100 to take pictures. The camera unit 148 includes a camera controller 150, a current drive unit 152, a camera lens sub-unit 154, a camera flash sub-unit 156, a camera sensor sub-unit 158 and an image capture input 160. The camera controller 150 configures the operation of the camera unit 148 in conjunction with information and instructions received from the microprocessor 102 and the camera module 138. It should be noted that the structure shown for the camera unit 148 and the associated description is only one example embodiment and that the technique of obtaining camera images for viewing on the display 110 should not be limited to this example embodiment. Furthermore, there may be alternative embodiments of the mobile device 100 which do not use the camera unit 148.

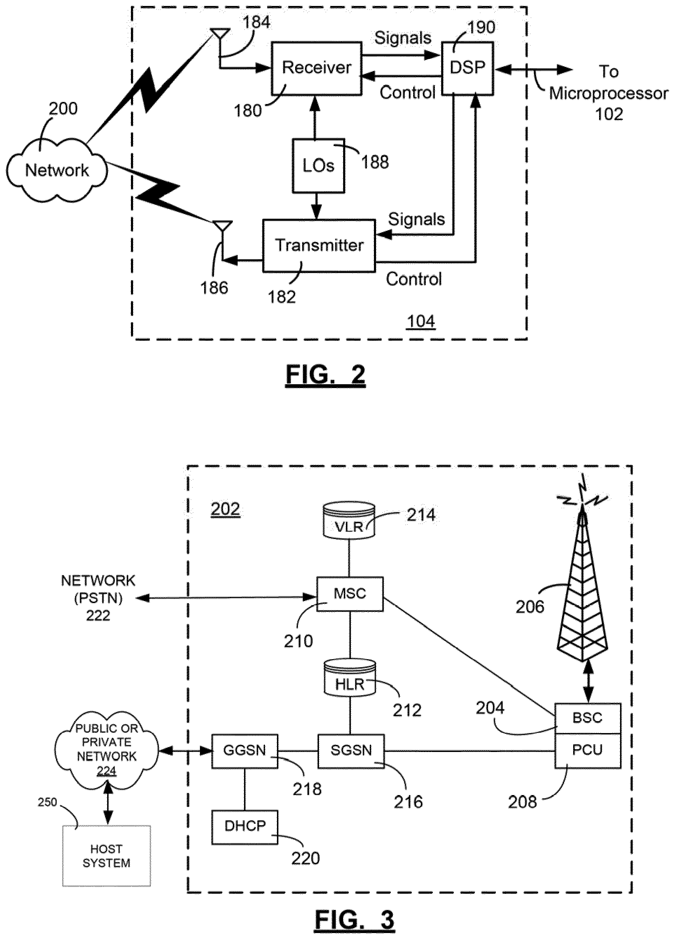

Referring now to FIG. 2, a block diagram of an example embodiment of the communication subsystem component 104. The communication subsystem 104 comprises a receiver 180, a transmitter 182, one or more embedded or internal antenna elements 184, 186, Local Oscillators (LOs) 188, and a processing module such as a Digital Signal Processor (DSP) 190.

The particular design of the communication subsystem 104 is dependent upon the network 200 in which the mobile device 100 is intended to operate; thus, it should be understood that the design illustrated in FIG. 2 serves only as one example. Signals received by the antenna 184 through the network 200 are input to the receiver 180, which may perform such common receiver functions as signal amplification, frequency down conversion, filtering, channel selection, and analog-to-digital (A/D) conversion. A/D conversion of a received signal allows more complex communication techniques such as demodulation and decoding to be performed in the DSP 190. In a similar manner, signals to be transmitted are processed, including modulation and encoding, by the DSP 190. These DSP-processed signals are input to the transmitter 182 for digital-to-analog (D/A) conversion, frequency up conversion, filtering, amplification and transmission over the network 200 via the antenna 186. The DSP 190 not only processes communication signals, but also provides for receiver and transmitter control. For example, the gains applied to communication signals in the receiver 180 and the transmitter 182 may be adaptively controlled through automatic gain control algorithms implemented in the DSP 190.

The wireless link between the mobile device 100 and a network 200 may contain one or more different channels, typically different RF channels, and associated protocols used between the mobile device 100 and the network 200. An RF channel is a limited resource that must be conserved, typically due to limits in overall bandwidth and limited battery power of the mobile device 100.

When the mobile device 100 is fully operational, the transmitter 182 is typically keyed or turned on only when it is sending to the network 200 and is otherwise turned off to conserve resources. Similarly, the receiver 180 may be periodically turned off to conserve power until it is needed to receive signals or information (if at all) during designated time periods.

Referring now to FIG. 3, a block diagram of a node of a wireless network is shown as 202. In this example embodiment, the network and its components are described for operation with General Packet Radio Service (GPRS) and Global Systems for Mobile (GSM) technologies. However, it should be understood that in other embodiments the network can be implemented in accordance with other communication protocols. In practice, the network 200 comprises one or more nodes 202. The mobile device 100 communicates with a node 202 within the wireless network 200. The node 202 is configured in accordance with GPRS and GSM technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to the public or private network (Internet) 224 (also referred to herein generally as a shared network infrastructure) represents the data path for GPRS capable mobile devices. In a GSM network extended with GPRS capabilities, the BSC 204 also contains a Packet Control Unit (PCU) 208 that connects to the SGSN 216 to control segmentation, radio channel allocation and to satisfy packet switched requirements. To track mobile device location and availability for both circuit switched and packet switched management, the HLR 212 is shared between the MSC 210 and the SGSN 216. Access to the VLR 214 is controlled by the MSC 210.

The station 206 may be a fixed transceiver station in which case the station 206 and the BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further the VLR 214 also contains information on mobile devices that are visiting other networks. The information in the VLR 214 includes part of the permanent mobile device data transmitted from the HLR 212 to the VLR 214 for faster access. By moving additional information from a remote node of the HLR 212 to the VLR 214, the amount of traffic between these nodes can be reduced so that voice and data services can be provided with faster response times while at the same time using less computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, GPRS capable networks use private, dynamically assigned IP addresses and thus use a DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208 and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and the mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

The host system 250 may be a corporate enterprise or other local area network (LAN), but may also be a home office computer or some other private system, for example, in variant embodiments. In some cases, the host system 250 may represent a smaller part of a larger network of an organization. Typically, mobile devices communicate wirelessly with the host system 250 through one or more of the nodes 202 of the wireless network 200. The host system 250 may include one or more routers and computing devices that may operate from behind a firewall or proxy server. The proxy server routes data to the correct destination server(s) within the host system 250. For instance, the host system 250 may include a message server to send and receive messages to the mobile devices and a message management server that controls when, if, and how messages are sent to the mobile devices. The host system 250 can also include other servers that provide various functions for the host system 250 as well as data stores or databases.

As mentioned previously, in order to be able to choose a power management strategy that results in an improved or at least acceptable power usage, the current (or contemporary) or proposed (or predicted) activity of the electronic device may be monitored in order to determine the effect of the activity on power usage. Since activities of the electronic device are typically associated with one or more software applications, the electrical current usage associated with the software applications (which is related to how much power the software application consumes or otherwise expends) may be mapped in some fashion in order to predict future current usage. For example, some processor applications include functions that demand a high amount of energy, such as illuminating the display 110 or activating a wireless radio or making demands on the microprocessor 102. The power demands of some software applications may not be accurately estimated merely by observing the behavior of the software applications.

Conventional techniques to gauge a software application's power consumption typically follow a "bottom-up" approach in which every action taken by the application is analyzed and associated with a power or energy cost. These costs are then summed up during an application's typical run to determine what the typical power usage is for that application. However, it is not possible to look at an application's source code and its debug trace to determine if it is a major culprit in terms of power consumption. Conventional debugging tools enable the verification of code functionality, but not of code power consumption.

For example, an electronic device can have a software application that periodically sends a series of requests wirelessly to a remote server, waits for short wireless responses, and in some cases requests the server for a large set of data (e.g. Facebook and Twitter applications). The power consumption of this periodic behavior can be computed based on the power consumption of the radio for transmitting each data packet, for receiving each data packet, for keeping the radio idle, for waking up the radio and for shutting it down, respectively. Similarly, on the CPU side, the power consumption of the CPU and its associated components can be determined as the CPU talks with the radio, remains awake and spins idle while waiting for a response from the radio, processes the received data, and finally displays a notification on the screen, respectively.

This detailed component/subsystem level information about power usage may sometimes be available in data sheets, but such information is usually hard to obtain and use meaningfully, for any of several reasons. More often than not, such power usage information is missing from the data sheets. This usually means that a wide array of experiments on the electronic device with different electronic instruments is required in order to measure the power consumption of various systems and applications on an electronic device. This is a very laborious and expensive task, to say the least. Moreover, whenever the hardware or software design of the device changes, sometimes due to new radios, new CPUs, new sensors or altered power management policies, such fine-tuned experiments may be performed again in order to determine the proper power consumption values.

An additional shortcoming of the "bottom-up" approach is that the exact same application can have variable energy consumption due to its usage with random system states and a random external world. This means that the "bottom-up" approach is often not very accurate and cannot be altered "on-the-fly" (as conditions change) based on the operating state and external environment of the electronic device.

In contrast, the various embodiments described herein follow a "top-down" methodology for estimating the current consumption of applications and services that are executed on an electronic device. In particular, a dependence model can be obtained that shows the relationship between the electric current drawn by an electronic device and the activities performed on the electronic device that cause the current to be drawn. This relation is obtained by using a machine learning technique, in an initial training phase with training data that is obtained to analyze the behavior of the entire mobile device 100 (e.g., the microprocessor 102, the communication subsystem 104 and the various peripherals elements). The training data, which includes kernel event logs (the KEV-log), is separated into digests, each digest corresponding to a certain small fixed duration of time such as 20 ms, for example. In other words, a digest is a portion of the KEV-log. The KEV-log is described in more detail below. A current consumption value is associated with each digest by direct measurement using a current meter. The kernel event logs and the associated current consumption values (i.e. the current-annotated kernel event log) are used to learn a relationship between the contents of a digest and its current label, using a technique known as supervised learning. Supervised learning allows for the prediction of the current waveform from the KEV-log digests.

It should be noted that a digest that is used for training purposes may be referred to as a raw digest. Furthermore, a digest that is used during the estimation of current usage during actual or simulated device usage may be referred to as a component digest.

The Kernel EVent Log (KEV-log) is a detailed alphanumeric record, in real time, of the activities (low level events) of the Operating System (OS) kernel as various applications and services are actually executed on the mobile device 100 or are simulated to be executed on the mobile device 100 using a software simulator (e.g. SDK or IDE). For example, the KEV-log data can include time-stamped information such as at least one of: 1) threads that have or are currently running, 2) which messages are passed between processes (such as, but not limited to blocking remote procedure calls for example), 3) thread priorities and scheduling, 4) arrival and servicing of interrupts; and 5) information on other (non-blocking) signals between processes and threads, such as, but not limited to pulses, for example.

It has been found (that is, discovered through experimentation, testing, simulation or modeling) that that the digests, when represented in an appropriate high dimensional space by "featurization," tend to form distinct clusters. This is called unsupervised learning (as distinguished from supervised learning, described above). These clusters can be referred to as "atoms" of activity, since each atom represents a "prototype" of a 20 ms digest. For a given state/atom, the mobile device 100 produces digests that are similar to one another but not necessarily exact replicas of each other. As a user performs various human-time-scale activities (like composing and sending an email), the mobile device 100 "moves" from one cluster/atom of micro-activity to another as indicated by the 20-ms digests. Unsupervised learning thus allows for the dynamics of the clusters to be visualized and for the determination of the prototypical dominant (frequently occurring) atoms of activity, which gives hints or indications for managing power, because activity is related to power consumption. Such hints or indications may be useful to the electronic device itself in managing its own power consumption, as well as to be used by application developers or software programmers that may want to use available power efficiently.

Typically supervised learning is performed before unsupervised learning, but often several iterations may be performed to adjust the featurization of the digests. Unsupervised learning provides an indication of whether a particular featurization is good (i.e. it can discriminate between different clusters), which allows supervised learning to develop accurate predictive models.

In operation, when the user does any other activity on the mobile device 100 by running a service or an application (even those that were not part of the training), the overall activity of the mobile device 100 is approximately composed of the same digests that were found in the training stage. Thus, the energy usage of any application can be estimated or predicted purely from the digests that are obtained when the application is executed or simulated. The accuracy of the estimated current usage or estimated future current usage increases as more of the actual applications are used for training.

Referring now to FIG. 4, shown therein is a block diagram showing an example embodiment of data inputs that are used by the training module 170 and the current usage module 172 and the data outputs that are produced by these modules. In this example embodiment, the microprocessor 102 is configured to execute various instructions from the training module 170 and the current usage module 172. It should be noted that the power management IC 132 should be quick enough to sample the current being used by the mobile device 100 during training. If this is not possible, then the training may be done on a desktop computer (or a laptop computer or a tablet computer) in which the current measurements that are used in the training module 170 are provided by an external sampling power supply that is connected to the desktop computer. In alternative embodiments, there may be a single module that performs the functions of the training module 170 and the current usage module 172.

The training module 170 receives training set log data 400 which it analyzes in order to generate a current consumption model 402. The training set log data 400 comprises information on sets of activities (referred to as digests or activity sets) and the associated current consumption. The digests are groups of activities that are performed by the microprocessor 102, or other hardware components, subsystems, etc. while executing an application or providing a service. Each of the individual "activities" in a digest is of the form "<time stamp>:scheduling thread <X> to run". The <time stamp> typically has better than 1 ms resolution (typically micro-second). The <X> is a unique identifier for each thread in the system. These activities are logged by the operating system of the device and saved to a file for processing (i.e. the KEV-log). A digest typically has a number of contiguous activity entries that occurred during a certain time period of the log.

The digests and associated current consumption values are obtained under a wide variety of conditions, i.e., under a wide variety of internal states for the mobile device 100 as well as a wide variety of external environments. In one example embodiment, the log data 404 can be the KEV-log. The training set log data 400 can also use KEV-log data as well as values for the current consumption that was measured while the activities were being performed.

The training module 170 performs a transformation or a mapping (aka a featurization) on the digests to transform the digests to mapped data that is in a different space. The result of the mapping is referred to as a signature of the digest. For example, the result of a mapped digest used for training purposes can be referred to as a training signature and the result of a component digest may be referred to as a component signature. The transformation or mapping is one which is not lossy in terms of current predictive ability. The current consumption value associated with the digest is then associated with the mapped data. However, the current consumption value is not transformed. The training module 170 uses the mapped data and the associated current consumption values to generate the current consumption model 402.

One example of a model that can be used in the current consumption model 402 is the nearest neighbor model. This is simply a set of digests and their current values stored in some structure that is easily searchable. This information can be stored in a list or in a more sophisticated tree structure such as a vantage point tree. When the model is used to make a prediction on a test point (i.e. a test digest), the entire set is searched to find those few digests that are closest to the test digest (in terms of an appropriate metric). Then the average value of the known current usage (i.e. measured current usage) of those neighbors is used as an estimate of the current usage for the test digest.

Many other types of sophisticated models are possible like boosted decision trees, support vector regressors, belief networks and neural networks. The concepts described herein can use any one of these methods equally well. The current consumption model 402 is then stored on a suitable storage medium, such as the flash memory 108 for example, so that it can later be accessed by the current usage module 172.

The current usage module 172 receives log data 404 of various activities for which current consumption is to be estimated. The log data 404 can be of actual activity that is currently being performed as the mobile device 100 operates so that current consumption can be determined in real time during use and related to particular types of activities which may then be modified to reduce current consumption and therefore power consumption. In another use scenario for the current usage module 172, the log data 404 can be activities that are simulated for an application while the application is being developed and tested by a software programmer or an application developer. The software programmer or application developer can then use the predicted current usage to revise the code that they are writing in order to meet some current usage guidelines or requirements.

The top-down methodology described herein is superior over the conventional bottom-up approach described earlier because once the current consumption model is determined, it is no longer necessary to do any physical measurements of current consumption. Rather, the activities on the electronic device are recorded, separated into digests and then mapped to another space where the associated current consumption values can be estimated using the current consumption model 402.

In addition, the current usage estimation methods described herein can be incorporated, as described later, into a tool, such as an energy profiler application, that can be used in a Software Development Kit (SDK) or an integrated development environment (IDE). In an example embodiment, the energy profiler application can be activated by pressing or selecting a button in a debugger and used to give a reasonably accurate estimate of the current consumption of applications and services under various conditions and modes of operation for the electronic device, without the software developer having to do any further physical tests or guesswork based on data sheets.

It will be appreciated that as kernel logging is usually done at the lowest level of the mobile device 100, even the activities of the power management IC 132 can be recorded in the KEV-log. These activities can include the state of any Dynamic Voltage Frequency Scaling (DVFS) algorithms that are used (i.e. the operating point used for each core), as well as the sleep states and transitions of the CPU(s), which can all be used in a power management scheme for the mobile device 100 as is known to those skilled in the art.

The log data 404 can also capture information on the use of hardware resources such as the radio, for example. In these cases, information regarding the radio can be indirectly logged by configuring a logging instrument (e.g. a kernel logger or a trace logger) to record the number of packets sent and received on various network interfaces.

It is possible to map the various network interfaces to their associated physical hardware components (e.g. WiFi or cellular or Bluetooth). Therefore, a detailed log of communications between each hardware component and between some hardware components and other devices can be custom-built and stored on the mobile device 100. In other words, the log data 404 can be an unstructured data set that has detailed information regarding the "power state" of the mobile device 100 and how it evolves over time.

The training module 170 can be executed during an initial training phase in order to determine the current consumption model 402. The training phase involves using the mobile device 100 for several hours in various typical usage scenarios such as, but not limited to, web browsing, video and audio playback, email transmissions and reception as well as phone calls. During this training phase, the current drawn by the mobile device 100 is monitored and recorded, in the form of a current log, while the mobile device 100 is performing various functions and activities. The drawn current can be measured by using a current meter along of a sampling power supply. The current logging only needs to be done in the training phase when the relationship between KEV-log activity and current consumption is being determined. The current logging is done at a fine temporal spacing, which does not need to be exactly at the same spacing that is used to create the digests from the KEV-log data, as is explained in more detail below.

The training set log data 400 is created during this training phase. The training set log data comprises the KEV-log data as well as the associated current values that was measured when the activities logged in the KEV-log were performed. The KEV-log data records the low-level events, threads, and other system activities happening on the mobile device 100 during the training period. Each event or thread or any other activity recorded in the training log data 400 is time stamped to allow it to be associated with the measured current in the current log, which is also time stamped. The training module 170 can then process the KEV-log data and the current log to create and store the KEV-current-log data.

The KEV-current-log data can be broken or parsed into one or more raw digests that have relatively short intervals but can still contain up to several thousand lines. In this example embodiment, the raw digests do not overlap and occur sequentially in time with no gaps in between them. In alternative embodiments, there can be some small overlaps between adjacent digests or some small gaps between adjacent digests but the gaps cannot be large enough such that they routinely occur during significant current consumption events. That being said, the method is robust to large gaps that occur randomly. The length of each raw digest is typically in the range of milliseconds but in other embodiments may be in the range of centiseconds, deciseconds, or seconds. Each raw digest can have a length of, for example, 50 milliseconds. This length may vary in different runs as long as it is suitable for the purpose of power consumption prediction.

Once the training set data 400 has been collected, the training module 170 can then operate the microprocessor 102 to perform a mapping procedure in which each raw digest is mapped to a signature. The signature is a multi-dimensional vector or array that is unique to each raw digest. In other words, the text in a digest is mapped to a vector that has a certain number of elements such as, but not limited to, 50 or 100 elements, for example. Thus, a signature is the result of a mathematical mapping of a given digest and may be thought of as a representation of a digest that is usually smaller than the digest itself.

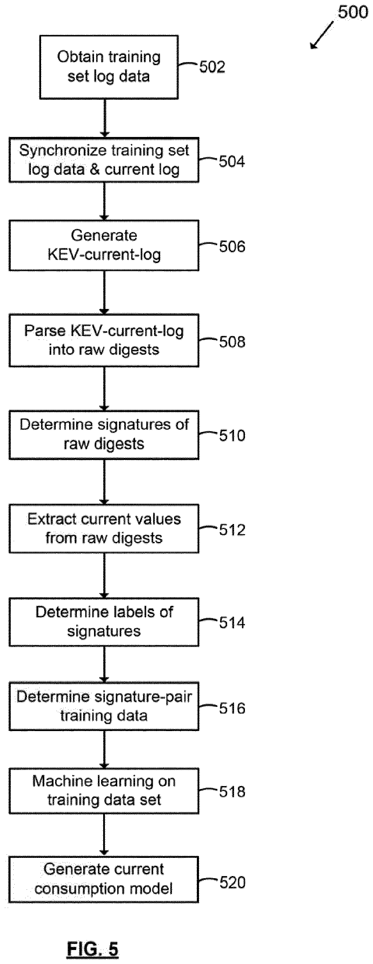

In addition, the training module 170 can determine a current stamp or label of the mapped raw digest based on some algorithm, such as averaging all the current consumption values over the length of the raw digest. This current stamp (e.g. average current consumption value) subsequently can be assigned as the "label" that is associated with the signature of the corresponding raw digest. The collection of these label-signature pairs obtained from the raw digests can be the training set log data 400 from which the current consumption model 402 is determined. That is, the training module 170 can further operate the microprocessor 102 to apply a Machine Learning (ML) procedure to "learn", or to infer, one or more relationship function(s) between the signatures and the corresponding labels of the raw digests. The training module 170, via machine learning, can thereby determine the energy consumption model 402 based on some or all of these relationship functions. Once determined, the energy consumption model may be stored in a storage device such as the flash memory 108, for example. The energy consumption model 402 can be used in the future by the current usage module 172 to estimate current consumption for some or all of the components of the mobile device 100. The operation of an example embodiment of the training module 170 is described with respect to FIG. 5.

In one example embodiment, the current usage module 172 is executed to estimate the current consumed by the mobile device 100 during a particular period selected by the user of the mobile device 100. The current usage module 172 can retrieve or access the log data 404, then parse it into a series of continuous component digests of short intervals. It will be appreciated that the log data 404 on the same device at different points in time may contain different logged information. Therefore, the training set log data 400 obtained during the initial training phase can be different from the log data 404 that is obtained during the operation of the current usage module 172. The length of the component digests can be the same as the length of the raw digests used in the initial training phase. The component digests can then be mapped to corresponding signatures, which are then analyzed based on the current consumption model 402 to determine the corresponding labels, i.e. the current consumption values. The current consumption values can be further processed, as described in further detail below, and output as the estimated current usage data 406 for the period selected by the user.

Referring now to FIG. 5, shown therein is a flowchart illustrating an example embodiment of a method 500 for obtaining a training dataset for use with the current usage module 172. The training module 170 executes the training method 500 during an initial training phase.

At 502, the training method 500 obtains training set log data 400, when executing a plurality of activities on the mobile device 100. The training set log data comprises kernel event log data and current log data. The training set log data is usually presented in a format that is readily accessible and analyzable, such as, a Common Log Format (CLF) or an Extended Log Format (ELF) are used, which are standardized log formats known to those skilled in the art. However, in other embodiments, the format may be different such that the processing (e.g. parsing and the like) that is done may have to be tailored as different operating systems may provide slightly different formats. Furthermore, depending on the content of the KEV-log, the parser may eliminate some of the log entries that contribute more to 'noise' than to useful information.

For example, the KEV-log may be produced by in an OS specific proprietary format in which case the parser is tailored to split the log into segments and replace any "position dependent" attributes/values with "position independent" attributes/values. Typically this involves replacing absolute time stamps with relative (to the start of the segment) time stamps, although there may be other attributes/values that may be suitably adjusted. The final encoding of the digests can be text or binary.

In addition, the current-log typically depends on the equipment used to collect the current information. The current trace data is usually a uniformly sampled version of the actual current used by the device under test. The sample rate (and input bandwidth) generally ought to be at least an order of magnitude larger than the equivalent digest length (e.g. a 20 ms digest may be sampled with a 1 KHz sample rate which provides almost a 500 Hz input bandwidth). The current log is then usually in the form a list of <time stamp>: <average current during sampling interval> pairs. Most equipment that collects these sampled current traces can output the list of pairs in a CSV format.

As described above, the training set log data 400 can be a kernel log (i.e. KEV-log data) and also includes a current log of measured or simulated current usage depending on whether the training set data is obtained when the electronic device is actually operated or is simulated to operate. The training set log data 400 may be generated from the actual operation or the simulation of an electronic device in the same manner as was described for the generation of the log data 404. The training set log data also includes time stamps of when instructions were performed as well as when current measurements were made. However, these two sets of time stamps are not necessarily synchronized.

The current logging is performed in the initial training phase when raw data is gathered for the purpose of learning the relationship between the KEV-log activity and current consumption. The current log is measured on a fine temporal basis (e.g. one millisecond) while a user uses or simulates operation of the mobile device 100 for several hours in various typical usage scenarios such as, but not limited, web browsing, video and audio playback, email composing and transmissions, email and data reception as well as receiving and conducting phone calls, etc. Every major use case of the mobile device 100 can be exercised during the training phase. However, this list of use cases need not be exhaustive since the current consumption model 402 can advantageously be determined from one set of activities and then used to predict current consumption for other activities that may not have been used in the training phase due to the nature of the digests and atoms that are used in this current consumption usage and prediction techniques described herein.

The current log is time stamped by using the clock of the sampling power supply, which may be different, out-of-sync or both different and out-of-sync with the clock of the microprocessor 102. In order to improve the accuracy of power consumption prediction, at 504 the training set current log and the training set KEV-log are synchronized. In order to allow for synchronization, in this example embodiment, a marking process is used during log recording which entails inserting marker activity into the operation or simulation of the mobile device 100. The marker activity results in a known, distinct current spike pattern that is measured, time stamped and recorded in the training set current log. An example of marker activity is blinking the display 110 on and off several times by using a known pseudo random duty cycle for a certain time duration such as about one second, for example. The blinking or pulsing of the display 110 on and off will show up in the training set current log as a quasi-square wave because turning the display 110 on and off results in a very significant and visually noticeable current usage pattern. This can be done in many ways, such as by running a periodic "pulser" process that runs every few seconds or minutes, for example. Since the marker activity is generated by a process, the same marker activity will be recorded in the training set KEV-log as well. Therefore, both the training set current log and the training set KEV-log encode the same periodic marker activity.

At 504, the method 500 comprises synchronizing the current log data with the kernel event log data when the current log data and the kernel event log data are not synchronized with one another. The current log is retrieved from the sampling power supply. For synchronization, the time stamps of the marker activity in the training set current log are correlated with the time stamps of the corresponding process information in the training set KEV-log. The correlation is used as a phase error detector that feeds a phase locked loop. The phase locked loop inserts or deletes samples into the training set current log in order to align the series of markers (e.g. intermittent pulser activities) in the training set current log with the corresponding pulser activity that is recorded in the training set KEV-log. After the synchronization process, the data in the training set current log and the data in the training set KEV-log are synchronized in time. In alternative embodiments, this issue may be avoided by strobing the clock of the current meter off of the master clock waveform of the mobile device 100 which will force the two clocks to be synchronized with one another and no adjustment of the current log and the KEV-log is needed.

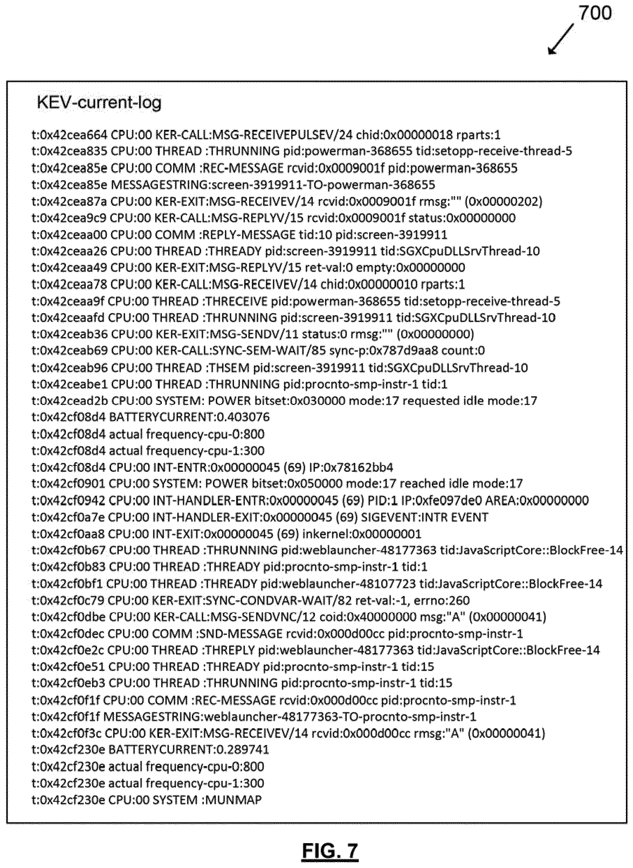

At 506, after time synchronization, the training set current log and the training set KEV-log are merged to form the KEV-current-log data, which can also be referred to as the training set log data. The KEV-current-log looks like the original KEV-log except that it has intermittent log lines denoting the actual or simulated current drawn by the mobile device 100 at various points in time. FIG. 7 provides an example of a KEV-current-log.

At 508, the KEV-current-log is parsed (i.e. separated) into a plurality of raw digests that typically have equal, short intervals. The raw digests are typically contiguous but in alternative embodiments at least one of small gaps and unequal lengths (with small differences) can be used. The interval can be of a length that is appropriate based on the time duration for which the current estimation is generated, but good results are typically obtained when the interval is in the range of milliseconds. For example, raw digests may be generated such that they are 20 or 50 milliseconds long. Each raw digest has information from the KEV-log lines and the corresponding current log lines, respectively.

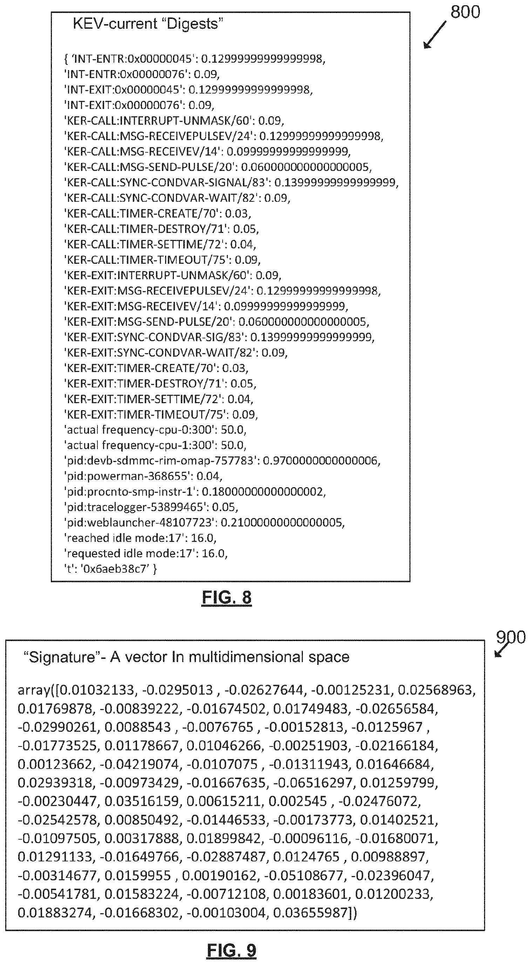

At 510, for a given raw digest, the method 500 extracts the KEV-log lines from the given raw digest by removing or ignoring the current log lines (i.e. values) in the given raw digest and mapping the KEV-log lines and mapping the raw digests to obtain signatures for the raw digests. One example of this mapping involves generating a bag-of-word array, which is a histogram. The bag-of-word array is generated by treating the KEV-log lines in the given raw digest as textual content and counting the occurrences of various words and phrases. The order of the words is lost in word bagging. In some embodiments, weighting factors for various words and phrases can be used to adjust the relative importance of each word or phrase in the raw digest. For example, a small or zero weight can be given to terms that occur frequently irrespective of the activity of the mobile device 100. These are much like words such as "and", "of", "in", "to" and the like in the English language that are scattered evenly across any portion of text and do not convey any significant information. On the other hand certain terms in the KEV-log are more useful such as "INTERRUPT" or "SLEEP" in terms of the amount of current drawn. These are analogous to words like "DANGER" or "BOMB" in the English language, in that they can be highly significant. FIG. 8 shows an example of a bag-of-word array with different weights for a raw digest.

At 510, the method 500 then maps the bag-of-word array to a homomorphic signature of real numbers. This mapping does not strictly have to be a one-to-one mapping nor does it have to be exactly distance preserving. Rather, it is approximately distance preserving, and hence preserves mutual information between the digest and its current label. Various techniques can be used to perform this mapping, one example of which is described in U.S. Patent Application Serial No. 13/416,538 entitled "Signal Representation of Data Having High Dimensionality", filed on March 9, 2012 with inventors Anand Oka, Chris Snow, Sean Simmons. This particular mapping technique is based on the concept of compressive sensing of sparse objects. The signature has the property of being approximately zero-mean Gaussian with independent and identically distributed (i.i.d.) components. The signature also captures all the relevant information in the given raw digest in a form that is amenable to classic machine learning algorithms. FIG. 9 shows an example of a signature from a mapping of the bag-of-word of FIG. 8 using the homomorphic mapping technique described above. Other forms of mapping can be used as long as the mapping provides a nearly one to one transformation and approximate distance preservation. The term approximate distance preservation means that different digests may be mapped to different signatures such that the mapping map not retain the distance between the digests but nevertheless produces a mapping that is distinct enough to result in good results for the current estimation techniques described herein. However, it has been found that the homomorphic signature of KEV log data textual data is an efficient and compact way of capturing the information in KEV logs for current prediction.

At 512, the method 500 extracts the current values from the raw digests that correspond to the signatures in order to determine the current stamps (i.e. current labels) of the signatures. It should be noted that these signatures can be referred to as training signatures since they are part of the training set data.

For example, in one embodiment at least a portion of the current stamps in a given raw digest can be averaged and used as the current stamp of the given raw digest. This means that any activities or dynamics that are faster than the time length of the raw digests are ignored so the method 500 is tolerant to a latency that is equal to the time length of the raw digests. Furthermore, any logged activity within the interval of a given raw digest is captured by the given raw digest, regardless of where the logged activity happens within the given raw digest.

At 514, the labels for the training signatures are based on the current values determined at 512. Accordingly, when the mobile device 100 is performing any specific activity, such as using the radio, reading data from external memory or performing mathematical calculations, each of the KEV-log raw digests, and hence the respective training signatures, has a distinctly recognizable and idiosyncratic fingerprint such that there is almost a "one-to-one" relationship between the signatures and the associated labels.

At 516, the method 500 takes the training signatures of the raw digests and associates them with the corresponding labels of the raw digests to construct training signature-label pairs for the raw digests. The signature-label pairs are used as training data for a Machine Learning (ML) process in order to determine the energy consumption model 402.

At 518, the method 500 applies the ML algorithm to the training signatures and corresponding labels to determine a relationship between the activities and the current usage used to generate the current consumption model. In other words, the method 500 uses the ML algorithm to learn a relationship between training signatures of the KEV-log digests and the associated current labels based on the training set log data. Ideally, the training set log data comprises several (hundreds of thousands) of KEV log and current log data sets obtained by performing typical activities on the mobile device 100 or a simulator of the mobile device 100 under various conditions.

The ML algorithm can be based on the nearest neighbor model or support vector regression. In this example embodiment, a VP-tree based nearest-neighbor algorithm is used as the ML algorithm. The VP-tree based nearest-neighbor algorithm tends to be more cost-effective and can be easily implemented in the training module 170 of the mobile device 100 as well as a component of the SDK/IDE for developers. In alternative embodiments, other kinds of ML algorithms may be used such as, but not limited to, support vector machine algorithms, decision-tree algorithms, linear or logistic regression algorithms, a boosted decision tree and a neural network as well as other techniques described earlier.

At 520, once the ML algorithm has been trained, it has generated a current consumption model. The current consumption model can enable the ML algorithm to make a fairly accurate estimate of the current drawn or current usage during a particular KEV-log digest in the future. This is possible since the ML algorithm can use the current consumption model 402 to determine current label for the signatures (where each signature represents a digest).

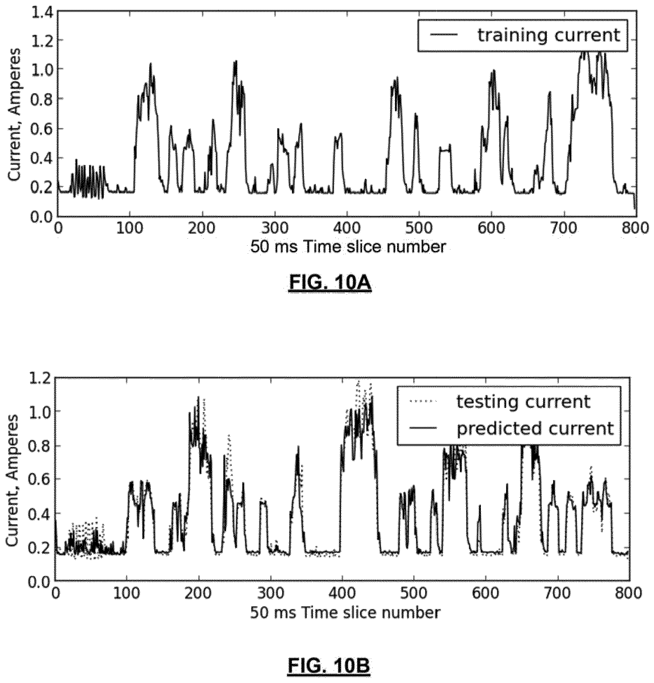

Referring now to FIGS.10A and 10B, shown therein are the results of training and test phases for the current usage module 172. FIG. 10A shows the current that was drawn during a training phase comprising web browsing activity for about 40 seconds. In a test phase having a separate run of 40 seconds, another sequence of similar, but not identical, web browsing activities was performed in which different URLs were navigated, and different articles were read. FIG. 10B shows the actual current drawn and the estimated current drawn during the test phase. It can be seen that the estimate agrees very closely with the true current drawn. It can also be seen that the accuracy is acceptable for good energy profiling. It should be noted that in this training and testing example, the time slice of each digest in is 50 milliseconds, which is still relatively fine grained for energy consumption profiling purposes. It should also be noted that the "marker" sequence of pulses that were used to synchronize the KEV-log and the current log are visible in the graphs.

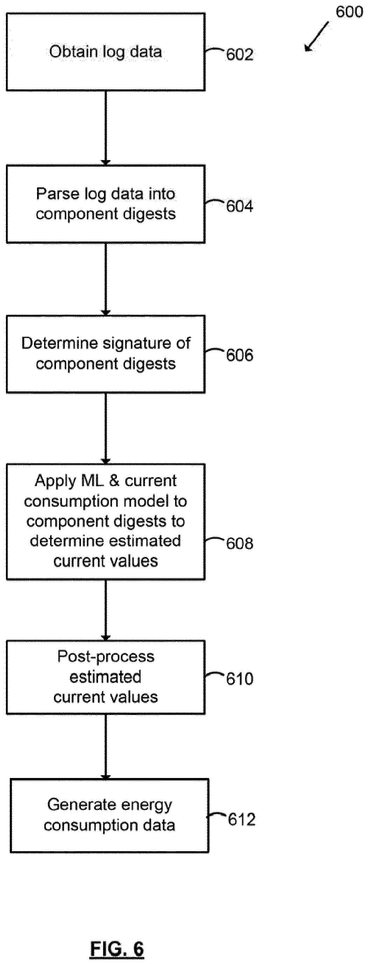

Referring now to FIG. 6, shown therein is a flowchart illustrating an example embodiment of a current usage estimation method 600. The current usage module 170 executes the current usage estimation method 600 to estimate the current consumption of the mobile device 100 during a user selected time period T.

At 602, the method 600 obtains log data comprising a record of at least some activities of the mobile device 100 during a selected time period. The log data is typically in the same format as the training set log data used during the initial training phase. However, the detailed information contained in the log data may be different as the actual or simulated activity during the user-selected time period T is most likely different from the actual or simulated activity that occurred during the initial training phase. Furthermore, in this case the log data comprises the kernel event log data, or KEV-log and not the current log.

At 604, in a similar fashion as 508 of method 500, the log data is parsed into a plurality of component digests of short intervals. The length of the intervals of each component digest may be roughly the same as that of the raw digests during the initial training phase as 10% variations in digest time length are well tolerated.

At 606, in a similar fashion as 510 of method 500, the KEV-log lines of the component digests are mapped to an N-dimensional vector using a transformation technique that is at least approximately distance preserving. This means that the transformation technique can be a 1 to 1 mapping or it can be exactly distance preserving but in alternative embodiments, it cannot be strictly 1 to 1 or not strictly distance preserving but still mutual information between the component digest and its current label.

In some embodiments, the mapping at 606 comprises mapping the component digests to bag-of-word arrays by treating the KEV-log lines as textual content and counting the occurrences of text (e.g. various words and phrases) in the component digest and applying different weights to occurrences of different text in the component digest. The method 600 then maps the bag-of-word arrays to the component signatures of real numbers by using the same mapping technique that was using at least an approximately distance preserving transformation (i.e. the same mapping technique that was used during the training phase).

At 608, the method 600 estimates the current consumption values (i.e. corresponding labels) for the component digests based on component signatures of the component digests, the current consumption model 402 and a machine learning technique (i.e. the ML algorithm). The ML algorithm used here is the same algorithm used during the initial training phase. The activity at 608 can be generally thought of as having to determine the similarity between the training signatures in the training set to the component signatures from the component digests currently being evaluated in order to determine a corresponding label (i.e. current consumption value). In some embodiments, this can be done by obtaining the label of the training signature from the training set that is closest to the component signature being evaluated. The estimated current consumption values may be stored in memory elements 106 or 108 of the mobile device 100.

At 610 and 612, the method 600 post-processes the estimated current consumption values to estimate the current consumption data for the mobile device 100; this data can be output as a final result in any of several user-selected formats. This user-selected format can be, but is not limited to, a current consumption chart, a power consumption chart (which can be derived from the relationship between current and power explained earlier), or a visual indicator of current consumption in the corresponding software code or applications. For instance, the color green can be used when the estimated current consumption is at or below an acceptable while the color red can be used when the estimated current consumption is above an acceptable level and is therefore too high. The estimated current consumption data can also be used by the mobile device 100 as part of its own power management operations, for example, by shutting down power-demanding operations or inhibiting functionality to conserve power.

In the example embodiments described herein, the training set log data more or less summarizes the behavior of the mobile device 100 (e.g. microprocessor 102, communication subsystem 104, various peripherals, etc.) in the form of a plurality of characteristic raw digests. The ML algorithm is then used on the training data to discover "power states" (i.e. atoms) of the mobile device 100. Rather than discovering these power states manually, the ML algorithm can automatically discover the power states from the training data. In addition, the embodiments described herein allow for a very large number of fine grained power states by parsing the training set log data into digests of short duration, which is typically impossible in a manual bottom-up approach. Therefore, a more accurate current consumption model or current consumption pattern can be established. After the initial training phase, when the user does any activity on the mobile device 100 such as, for example, running a service or an application (even those that were not used in the training phase), the overall activity of the mobile device 100 is approximately composed of the same fine grained power states that were determined in the training phase, even if they may be in different configurations and sequences which allows the current usage module 172 to predict the current consumption of each power state. By summing up the predicted current consumption values for all of the power states, an estimate of the current usage of an application, a service or the entire mobile device 100 may be obtained from which an energy or power usage can be derived since power is proportional to current and energy is the integration (summation) of power.

The embodiments described herein can also be used to predict the current consumption of any application purely from the log data that is produced while the application runs on a simulator of a SDK or an IDE without actually operating on the mobile device 100. Since KEV-logs can generally be retrieved directly from the simulator, the current usage prediction techniques described herein can be used in an Energy Profiler (EP) tool that developers may use to generate an accurate energy profile for the software code they write. This EP tool can include the training module 170 and the current usage module 172 with minor modifications based on the corresponding implementation of the actual mobile device 100. In particular, different analytics may be used for different form factors and perhaps major build versions of the OS, since both of these differences can lead to major changes in the energy consumption model. Thus, the proper analytics will automatically be chosen in the IDE depending on which target form factor and OS version the developer is building the application for.

In general, after an initial training phase for a model device, when a software application developer compiles and runs an application on the IDE, the EP tool can be used to extract the log data of the run at the end of the run. The log data is then sent to the energy usage module 172 which produces an estimated time-series of current drawn by the model device during the run by estimating the current consumption values of the digests that are part of the run. The estimated current consumption values can then be associated with certain portions of the code with the debugger trace of the run, that indicates which instruction or code statement was executing at what time step since the current consumption can be estimated for particular time steps by processing the appropriate digests of the KEV-log. At this point, the interleaved debug trace with energy consumption values (i.e. current annotated debug trace) can be processed in various ways to generate developer-friendly outputs.

For example, by normalizing for the current usage in various section of code, an estimate of the power-hungriness of different sections of code can be made and displayed with an appropriate color scheme in the IDE. For example, power-hungry sections may be displayed using the color red and power-efficient sections may be displayed using the color green. This immediately gives developers a visual indication of where to concentrate their efforts for better managing power consumption.

For example, based on the predicted current consumption, the portion of the code that consumes the most power can be ascertained. In addition, the portion of the code in which a significant amount of clock time is spent can be determined from the usual debug trace log. Both of these portions of code can be flagged or denoted with visual cues such as, but not limited to, a) a red (or any other color) background, b) a star rating (or any other symbol) in the margin of the IDE or c) a vertical bar chart (or any other chart) in the margin of the IDE. Furthermore, current usage for different sections of code can be shown using different colors for those different sections of code.

In some embodiments, the visual cues can be used to signal to the developer which portions of the code may need to be improved or may otherwise deserve attention, in a certain order of priority. As the programmer edits the code, the EP tool can be run again and again iteratively to indicate any progress that has been made in improving the energy efficiency of the code, which is shown by changing the visual cues appropriately. This means that the developer can be led to work on the parts of the code that are actually the worst energy consumption culprits, rather than those that are presumably energy guzzlers. Furthermore, the developer can see the improvement in the performance of the application in real-time as the developer is revising the code of the application.

In some embodiments, the EP tool can be configured to "forgive" parts of code that draw heavy current (as predicted) but where very little clock time is spent by not bringing such parts of the code to the developer's attention. This is because the little clock time mitigates against the heavy current consumption. On the other hand, there often are idle current or background activity scenarios that are large energy guzzlers and the EP tool can be configured to correctly identify these parts of the code so that the developer can revise the parts of the code to reduce or otherwise improve energy consumption.

In some embodiments, the current annotated debug trace can be used to compare the application under certain considerations that correspond to "equivalent good applications". This can be based on a list of "good" benchmark applications. A rating for the power usage of the application under consideration can then be given such as positive or negative, thumbs up or thumbs down, and the like.

In some embodiments, the current annotated debug trace can be used to define a test that is used to certify applications with regards to current consumption guidelines. This can act as an incentive for developers to keep on revising their application for increased power efficiency until the application is deemed to be certified, meaning that the application passed the certification test and has an acceptable level of current consumption.

In some embodiments, the predicted current consumption for each digest can be summed up to predict the time series of current consumption of the application or services that is operating during the run and also allows one to see how the current usage changes at different times. This time-series of current consumption can look as if it was measured with a real sampling power supply, but no such instruments will actually be needed from the developer.

In general, the EP tool is run for a prescribed period of time or until the user exits the application being tested.

In at least some embodiments, the EP tool can be configured to ignore digests (i.e. time-slices) that have nothing to do with the actual application being tested.

The EP tool can be particularly useful for developers who might otherwise have a difficult time correlating high speed current measurements to their application performance as well as determining if deltas to programs are power friendly.

In some embodiments, the EP tool can be used in at least one of: 1) ranking applications with respect to current usage, or 2) turning off certain applications that use too much current, reducing their frequency of operation or moving these applications to a low power mode.

The current usage estimation techniques described herein can be used in a wide variety of electronic devices such as smart phones, mobile devices, as well as any kind of electronics device that runs software applications for which energy efficiency may be a concern, such as, but not limited to, desktop computers or battery-operated devices. Accordingly, the current usage estimation techniques described herein can result in the use of less electricity and extended battery life. The current usage estimation techniques described herein can also be used for devices, such as single application devices for example, to determine current usage under different conditions.

In the case of smart phones, as a user is using the phone, the EP program can be running to show the user how heavy the power usage is based on estimated current consumption. In some embodiments, the EP program can show the user which applications are behaving in a current friendly manner, and which applications are draining too much current from the battery.

In some embodiments, if the predicted current consumption is too high, then the microprocessor 102 can start turning off or disabling certain features of the offending applications that are consuming the most current in order to reduce battery usage. Furthermore, the EP program may be used to predict what will happen in the next X minutes of operation based on the latest application usage and the current battery charge and provide feedback to the user so that the user can modify their behavior to extend the battery life and use the device longer. Therefore, the EP program can also be used to provide feedback to the user in real-time so that they can improve their usage of the mobile device 100.

At least some of the elements of the mobile device 100 such as the training module 170 and the current usage module 172 that are implemented via software may be written in a high-level procedural language such as object oriented programming or a scripting language. Accordingly, the program code may be written in C, C⁺⁺, SQL or any other suitable programming language and may comprise modules or classes, as is known to those skilled in object oriented programming. Alternatively, at least some of the elements of the training module 170 and the current usage module 172 that are implemented via software may be written in assembly language, machine language or firmware. In either case, the program code can be stored on a storage media or on a computer readable medium that is readable by a general or special purpose programmable computing device having a processor, an operating system and the associated hardware and software that implements the functionality of at least one of the embodiments described herein. The program code, when read by the computing device, configures the computing device to operate in a new, specific and defined manner in order to perform at least one of the methods described herein.

Furthermore, at least some of the methods described herein are capable of being distributed in a computer program product comprising a non-transitory computer readable medium that bears computer usable instructions for one or more processors. The medium may be provided in various forms such as, but not limited to, one or more diskettes, compact disks, tapes, chips, USB keys, external hard drives, wire-line transmissions, satellite transmissions, internet transmissions or downloads, magnetic and electronic storage media, digital and analog signals, and the like. The computer useable instructions may also be in various forms, including compiled and non-compiled code.

While the applicant's teachings described herein are in conjunction with various embodiments for illustrative purposes, it is not intended that the applicant's teachings be limited to such embodiments. On the contrary, the applicant's teachings described and illustrated herein encompass various alternatives, modifications, and equivalents, without departing from the embodiments, the general scope of which is defined in the appended claims.

## Claims

1. A computer-implemented method of estimating actual or simulated electrical current consumption of an electronic device (100), the method comprising:
obtaining (602) log data (404) comprising a record of at least some activities of the electronic device during a selected time period, the activities being actual or simulated kernel events of the electronic device;
parsing (604) the log data into a plurality of component digests, each component digest comprising a portion of said log data during a time interval;
estimating (608) electrical current consumption values for the plurality of component digests based on component signatures of the component digests, an electrical current consumption model (402) wherein the electrical current consumption model is generated by a machine learning technique based on a plurality of training signatures, the current consumption model being used to estimate electrical current consumption values by determining a similarity between said plurality of training signatures in a training set and the component signatures in order to determine a corresponding electrical current consumption value for each of the component digests; and
processing (610) the estimated electrical current consumption values to estimate (612) electrical current consumption data for the electronic device.

2. The method of claim 1, wherein estimating the electrical current consumption value for a given component digest comprises:
determining the component signature of the given component digest;
using the machine learning technique to locate a training signature from training set data that corresponds to the component signature, the correspondence being based on similarity; and
setting the estimated electrical current consumption value to an electrical current consumption label that is associated with the located training signature in the electrical current consumption model.

3. The method of any one of claims 1 to 2, wherein the method comprises estimating the electrical current consumption model by:
obtaining (502) training log data (400) when executing a plurality of activities on the electronic device, the activities being kernel events of an operating system of the electronic device and the training log data comprises kernel event log data and electrical current log data;
synchronizing (504) the electrical current log data with the kernel event log data when timing information in the electrical current log data and the kernel event log data are not synchronized to one another;
merging (506) the kernel event log data with the electrical current log data to form kernel-event-current log data;
parsing (508) the kernel-event-current-log data into a plurality of raw digests that each comprise portions of the training log data;
determining (510) training signatures for the plurality of raw digests after removing (512) the electrical current log values from the plurality of raw digests;
determining (514) labels for the training signatures from the electrical current usage values of the plurality of raw digests that correspond to the training signatures, the labels comprising electrical current usage values; and
applying the machine learning algorithm (518) to the training signatures and corresponding labels (516) to determine a relationship between the activities of the electronic device and the electrical current usage used to generate the electrical current consumption model (520).

4. The method of claim 3, wherein determining a given label associated with a given raw digest further comprises:
extracting the electrical current consumption values from the given raw digest;
computing an average electrical current consumption value from averaging the electrical current consumption values over the length of the given raw digest; and
assigning the average electrical current consumption value as the label associated with the training signature corresponding to the given raw digest.

5. The method of any one of claims 1 to 4, wherein the machine learning algorithm is one of a VP-tree based nearest-neighbor algorithm, a support vector machine algorithm, a decision-tree algorithm, a linear or logistic regression algorithm, a boosted decision tree and a neural network.

6. An electronic device (100) comprising:
a plurality of subsystems for providing various functions (106 to 124);
an operating system for enabling execution of software applications (134) and operation of the subsystems as well as logging activity of the electronic device in log data;
a processor (102) that controls the operation of the electronic device, the processor being configured to estimate actual or simulated electrical current consumption of the electronic device by: obtaining log data comprising a record of at least some activities of the electronic device during a selected time period, the activities being actual or simulated kernel events of the electronic device; the processor being configured to parse the log data into a plurality of component digests, each component digest comprising a portion of said log data during a time interval; the processor being configured to estimate electrical current consumption values for the plurality of component digests based on component signatures of the component digests, an electrical current consumption model, wherein the electrical current consumption model is capable of being generated by a machine learning technique based on a plurality of training signatures, the current consumption model being used to estimate electrical current consumption values by a determination of a similarity between said plurality of training signatures in a training set and the component signatures in order to determine a corresponding electrical current consumption value for each of the component digests; and the processor being configured to process the estimated electrical current consumption values to estimate electrical current consumption data for the electronic device.

7. The device of claim 6, configured to estimate the electrical current consumption value for a given component digest, wherein the estimation comprises:
a determination of the component signature of the given component digest;
a use of the machine learning technique to locate a training signature from training set data that corresponds to the component signature, the correspondence being based on similarity; and
a setting of the estimated electrical current consumption value to an electrical current consumption label that is associated with the located training signature in the electrical current consumption model.

8. The device of any one of claims 6 to 7, configured for estimating the electrical current consumption model , further configured to
obtain (502) training log data (400) during execution of a plurality of activities on the electronic device, the activities being kernel events of an operating system of the electronic device and the training log data comprises kernel event log data and electrical current log data;
synchronize (504) the electrical current log data with the kernel event log data when timing information in the electrical current log data and the kernel event log data are not synchronized to one another;
merge (506) the kernel event log data with the electrical current log data to form kernel-event-current log data;
parse (508) the kernel-event-current-log data into a plurality of raw digests that each comprise portions of the training log data;
determine (510) training signatures for the plurality of raw digests after removing (512) the electrical current log values from the plurality of raw digests;
determine (514) labels for the training signatures from the electrical current usage values of the plurality of raw digests that correspond to the training signatures, the labels comprising electrical current usage values; and
apply the machine learning algorithm (518) to the training signatures and corresponding labels (516) to determine a relationship between the activities of the electronic device and the electrical current usage used to generate the electrical current consumption model (520).

9. The device of claim 8, configured for determining a given label associated with a given raw digest, further configured to:
extract the electrical current consumption values from the given raw digest; compute an average electrical current consumption value from averaging the electrical current consumption values over the length of the given raw digest; and
assign the average electrical current consumption value as the label associated with the training signature corresponding to the given raw digest.

10. The device of any one of claims 6 to 9, wherein the machine learning algorithm is one of a VP-tree based nearest-neighbor algorithm, a support vector machine algorithm, a decision-tree algorithm, a linear or logistic regression algorithm, a boosted decision tree and a neural network.

11. A computer readable medium (106, 108) comprising a plurality of instructions executable on a microprocessor (102) of an electronic device (100) for adapting the electronic device to implement a method according to any one of claims 1 to 5.

## Patentansprüche

1. Computer-implementiertes Verfahren des Schätzens eines tatsächlichen oder simulierten Stromverbrauchs einer elektronischen Vorrichtung (100), wobei das Verfahren umfasst:
Erhalten (602) von Protokolldaten (404), die eine Aufzeichnung von zumindest einigen Aktivitäten der elektronischen Vorrichtung während eines ausgewählten Zeitraums umfassen, wobei die Aktivitäten tatsächliche oder simulierte Ereignisse eines Kernels der elektronischen Vorrichtung sind;
Parsen (604) der Protokolldaten in eine Vielzahl von Komponentenkurzfassungen, wobei jede Komponentenkurzfassung einen Teil besagter Protokolldaten während eines Zeitintervalls umfasst;
Schätzen (608) von Stromverbrauchswerten für die Vielzahl von Komponentenkurzfassungen basierend auf Komponentensignaturen der Komponentenkurzfassungen, einem Stromverbrauchsmodell (402),
wobei das Stromverbrauchsmodell durch eine maschinelle Lerntechnik basierend auf einer Vielzahl von Trainingssignaturen erzeugt wird, wobei das Stromverbrauchsmodell dazu verwendet wird, Stromverbrauchswerte durch Bestimmen einer Ähnlichkeit zwischen besagter Vielzahl von Trainingssignaturen in einem Trainingssatz und den Komponentensignaturen zu schätzen, um einen entsprechenden Stromverbrauchswert für jeden der Komponentenkurzfassungen zu bestimmen; und
Verarbeiten (610) des geschätzten Stromverbrauchswerts, um Stromverbrauchsdaten für die elektronische Vorrichtung zu schätzen (612).

2. Verfahren nach Anspruch 1, wobei das Schätzen des Stromverbrauchswerts für eine vorhandene Komponentenkurzfassung umfasst:
Bestimmen der Komponentensignatur der vorhandenen Komponentenkurzfassung;
Verwenden der Maschinenlerntechnik, um eine Trainingssignatur von Trainingssatzdaten, die der Komponentensignatur entsprechen, zu lokalisieren, wobei die Entsprechung auf Ähnlichkeit basiert; und
Festlegen des geschätzten Stromverbrauchswerts auf ein Stromverbrauchslabel, das mit der lokalisierten Trainingssignatur in dem Stromverbrauchsmodell in Zusammenhang steht.

3. Verfahren nach einem der Ansprüche 1 bis 2, wobei das Verfahren das Schätzen des Stromverbrauchsmodells umfasst, durch:
Erhalten (502) von Trainingsprotokolldaten (400), wenn eine Vielzahl von Aktivitäten in der elektronischen Vorrichtung ausgeführt wird, wobei die Aktivitäten Ereignisse eines Kernels eines Betriebssystems der elektronischen Vorrichtung sind und die Trainingsprotokolldaten Protokolldaten eines Ereignisses des Kernels und Stromprotokolldaten umfassen;
Synchronisieren (504) der Stromprotokolldaten mit Protokolldaten eines Ereignisses des Kernels, wenn Zeitinformationen in den Stromprotokolldaten und den Protokolldaten eines Ereignisses des Kernels nicht miteinander synchronisiert sind;
Zusammenführen (506) der Protokolldaten eines Ereignisses des Kernels mit den Stromprotokolldaten, um Stromprotokolldaten eines Ereignisses des Kernels zu bilden;
Parsen (508) der Stromprotokolldaten eines Ereignisses des Kernels in eine Vielzahl von rohen Kurzfassungen, die jeweils Teile der Trainingsprotokolldaten umfassen;
Bestimmen (510) von Trainingssignaturen für die Vielzahl von rohen Kurzfassungen nach Entfernen (512) der Stromprotokolldaten aus der Vielzahl von rohen Digests;
Bestimmen (514) von Labels für die Trainingssignaturen aus den Stromverbrauchswerten der Vielzahl von rohen Kurzfassungen, die den Trainingssignaturen entsprechen, wobei die Labels Stromverbrauchswerte umfassen; und
Anwenden des maschinellen Lernalgorithmus (518) auf die Trainingssignaturen und die entsprechenden Labels (516), um ein Verhältnis zu bestimmen zwischen den Aktivitäten der elektronischen Vorrichtung und dem Stromverbrauch, das verwendet wird, um das Stromverbrauchsmodell (520) zu erzeugen.

4. Verfahren nach Anspruch 3, wobei das Bestimmen eines vorhandenen Labels, das mit einer vorhandenen rohen Kurzfassung in Zusammenhang steht, ferner umfasst:
Extrahieren der Stromverbrauchswerte aus den vorhandenen rohen Kurzfassungen;
Errechnen eines Durchschnitts-Stromverbrauchswerts durch Mitteln der Stromverbrauchswerte über die Länge der vorhandenen rohen Kurzfassung; und
Zuweisen des Durchschnitts-Stromverbrauchswerts als das Label, das mit der Trainingssignatur, die der vorhandenen rohen Kurzfassung entspricht, in Zusammenhang steht.

5. Verfahren nach einem der Ansprüche 1 bis 4, wobei der maschinelle Lernalgorithmus ein VP-Baum basierter Nearest-Neighbor-Algorithmus oder ein Algorithmus einer Support Vector-Maschine oder ein Entscheidungsbaum-Algorithmus oder ein linearer oder logistischer Regressionsalgorithmus oder ein verstärkter Entscheidungsbaum oder ein neurales Netzwerk ist.

6. Elektronische Vorrichtung (100), aufweisend:
eine Vielzahl von Subsystemen zum Bereitstellen verschiedener Funktionen (106 bis 124);
ein Betriebssystem zum Ermöglichen der Ausführung von Softwareanwendungen (134) und des Betriebs der Subsysteme, sowie einer Protokollierungsaktivität der elektronischen Vorrichtung in Protokolldaten;
einen Prozessor (102), der den Betrieb der elektronischen Vorrichtung steuert, wobei der Prozessor eingerichtet ist, den tatsächlichen oder simulierten Stromverbrauch der elektronischen Vorrichtung zu schätzen, durch: Erhalten von Protokolldaten, die eine Aufzeichnung von zumindest einigen Aktivitäten der elektronischen Vorrichtung während eines ausgewählten Zeitraums umfassend, wobei die Aktivitäten tatsächliche oder simulierte Ereignisse eines Kernels der elektronischen Vorrichtung sind; der Prozessor eingerichtet ist, die Protokolldaten in eine Vielzahl von Komponentenkurzfassungen zu zerlegen, wobei jede Komponentenkurzfassung einen Teil besagter Protokolldaten während eines Zeitintervalls umfasst; der Prozessor eingerichtet ist, Stromverbrauchswerte für die Vielzahl von Komponentenkurzfassungen basierend auf Komponentensignaturen der Komponentenkurzfassungen zu schätzen, einem Stromverbrauchsmodell, wobei das Stromverbrauchsmodell durch eine maschinelle Lerntechnik basierend auf einer Vielzahl von Trainingssignaturen erzeugt werden kann,
wobei das Stromverbrauchsmodell verwendet wird, um Stromverbrauchswerte durch eine Bestimmung einer Ähnlichkeit zwischen besagter Vielzahl von Trainingssignaturen in einem Trainingssatz und den Komponentensignaturen zu schätzen, um einen entsprechenden Stromverbrauchswert für jeden der Komponentenkurzfassungen zu bestimmen; und der Prozessor eingerichtet ist, die geschätzten Stromverbrauchswerte zu verarbeiten, um Stromverbrauchsdaten für die elektronische Vorrichtung zu schätzen.

7. Vorrichtung nach Anspruch 6, die eingerichtet ist, um den Stromverbrauchswert für einen vorhandenen Komponentenkurzfassungen zu schätzen, wobei die Schätzung umfasst:
eine Bestimmung der Komponentensignatur der vorhandenen Komponentenkurzfassung;
eine Verwendung der maschinellen Lerntechnik, um eine Trainingssignatur von Trainingssatzdaten, die der Komponentensignatur entsprechen, zu lokalisieren, wobei die Entsprechung auf Ähnlichkeit basiert; und
eine Festlegung des geschätzten Stromverbrauchswerts auf ein Stromverbrauchslabel, das mit der lokalisierten Trainingssignatur in dem Stromverbrauchsmodell in Zusammenhang steht.

8. Vorrichtung nach einem der Ansprüche 6 bis 7, die eingerichtet ist, um das Stromverbrauchsmodell zu schätzen, ferner eingerichtet, um:
Trainingsprotokolldaten (400) während der Ausführung einer Vielzahl von Aktivitäten in der elektronischen Vorrichtung zu erhalten (502), wobei die Aktivitäten Ereignisse eines Kernels eines Betriebssystems der elektronischen Vorrichtung sind und die Trainingsprotokolldaten Protokolldaten der Ereignisse des Kernels und Stromprotokolldaten umfassen;
die Stromprotokolldaten mit den Kernelereignisprotokolldaten zu synchronisieren (504), wenn Zeitinformationen in den Stromprotokolldaten und den Protolldaten der Ereignisse des Kernels nicht miteinander synchronisiert sind;
die Protokolldaten der Ereignisse des Kernels mit den Stromprotokolldaten zusammenzuführen (506), um Stromprotokolldaten eines Ereignisses des Kernels zu bilden;
die Stromprotokolldaten eines Ereignisses des Kernels in eine Vielzahl von rohen Kurzfassungen, die jeweils Teile der Trainingsprotokolldaten umfassen, zu parsen (508);
Trainingssignaturen für die Vielzahl von rohen Kurzfassungen nach Entfernen (512) der Stromprotokollwerte von der Vielzahl von rohen Kurzfassungen zu bestimmen (510);
Labels für die Trainingssignaturen von den Stromverbrauchswerten der Vielzahl von rohen Kurzfassungen, die den Trainingssignaturen entsprechen, zu bestimmen (514), wobei die Labels Stromverbrauchswerte umfassen; und
den maschinellen Lernalgorithmus (518) auf die Trainingssignaturen und die entsprechenden Labels (516) anzuwenden, um ein Verhältnis zwischen den Aktivitäten der elektronischen Vorrichtung und dem Stromverbrauch zu bestimmen, welches dazu verwendet wird, das Stromverbrauchsmodell (520) zu erzeugen.

9. Vorrichtung nach Anspruch 8, die eingerichtet ist, um ein gegebenes Label, das mit einer vorhandenen rohen Kurzfassung in Zusammenhang steht, zu bestimmen, ferner eingerichtet, um:
die Stromverbrauchswerte aus der vorhandenen rohen Kurzfassung zu extrahieren;
einen Durchschnitts-Stromverbrauchswert durch Mitteln der Stromverbrauchswerte über die Länge der vorhandenen rohen Kurzfassungen zu errechnen; und
den Durchschnitts-Stromverbrauchswert als das Label zuzuweisen, das mit der Trainingssignatur in Zusammenhang steht, die der vorhandenen rohen Kurzfassung entspricht.

10. Vorrichtung nach einem der Ansprüche 6 bis 9, wobei der maschinelle Lernalgorithmus ein VP-basierter Nearest-Neighbor-Algorithmus oder ein Support-Vector-Maschinenalgorithmus oder ein Entscheidungsbaum-Algorithmus oder ein linearer oder logistischer Regressionsalgorithmus oder ein verstärkter Entscheidungsbaum oder ein neurales Netzwerk ist.

11. Computerlesbares Medium (106, 108), das eine Vielzahl von Anweisungen aufweist, die auf einem Mikroprozessor (102) einer elektronischen Vorrichtung (100) ausführbar sind, zum Anpassen der elektronischen Vorrichtung, um ein Verfahren gemäß einem der Ansprüche 1 bis 5 zu verwirklichen.

## Revendications

1. Procédé mis en oeuvre sur ordinateur consistant à estimer la consommation réelle ou simulée de courant électrique d'un dispositif électronique (100), le procédé consistant à :
obtenir (602) des données de journaux (404) comprenant un enregistrement d'au moins certaines des activités du dispositif électronique pendant une période de temps sélectionnée, les activités étant des événements de noyau réels ou simulés du dispositif électronique ;
analyser syntaxiquement (604) les données de journaux afin d'obtenir une pluralités de résumés constitutifs, chaque résumé constitutif comprenant une partie desdites données de journaux pendant un intervalle de temps ;
estimer (608) des valeurs de consommation de courant électrique pour la pluralité de résumés constitutifs sur la base de signatures constitutives des résumés constitutifs, d'un modèle de consommation de courant électrique (402), où le modèle de consommation de courant électrique est généré par une technique d'apprentissage automatique sur la base d'une pluralité de signatures d'apprentissage, le modèle de consommation de courant étant utilisé pour estimer des valeurs de consommation de courant électrique en déterminant une ressemblance entre ladite pluralité de signatures d'apprentissage dans un ensemble d'apprentissage et les signatures constitutives afin de déterminer une valeur correspondante de la consommation de courant électrique pour chacun des résumés constitutifs ; et
traiter (610) les valeurs de consommation de courant électrique estimées afin d'estimer (612) des données de consommation de courant électrique pour le dispositif électronique.

2. Procédé selon la revendication 1, dans lequel l'estimation de la valeur de consommation de courant électrique pour un résumé constitutif donné consiste à :
déterminer la signature constitutive du résumé constitutif donné ;
utiliser la technique d'apprentissage automatique pour localiser une signature d'apprentissage parmi les données de l'ensemble d'apprentissage qui correspond à la signature constitutive, la correspondance ayant pour base la ressemblance ; et
régler la valeur de consommation de courant électrique estimée à une étiquette de consommation de courant électrique qui est associée à la signature d'apprentissage localisée dans le modèle de consommation de courant électrique.

3. Procédé selon l'une quelconque des revendications 1 et 2, le procédé consistant à estimer le modèle de consommation de courant électrique par le fait de :
obtenir (502) des données de journaux d'apprentissage (400) lors de l'exécution d'une pluralité d'activités sur le dispositif électronique, les activités étant des événements de noyau d'un système d'exploitation du dispositif électronique et les données de journaux d'apprentissage comprennent des données de journaux d'événements de noyau et des données de journaux de courant électrique ;
synchroniser (504) les données de journaux de courant électrique avec les données de journaux d'événements de noyau lorsque des informations de temporisation contenues dans les données de journaux de courant électrique et les données de journaux d'événements de noyau ne sont pas synchronisées les unes par rapport aux autres ;
fusionner (506) les données de journaux d'événements de noyau avec les données de journaux de courant électrique pour former des données de journaux d'événements de noyau-courant ;
analyser syntaxiquement (508) les données de journaux d'événements de noyau-courant afin d'obtenir une pluralité de résumés bruts qui comprennent chacun des parties des données de journaux d'apprentissage ;
déterminer (510) des signatures d'apprentissage pour la pluralité de résumés bruts après avoir éliminé (512) les valeurs de journaux de courant électrique de la pluralité de résumés bruts ;
déterminer (514) des étiquettes pour les signatures d'apprentissage parmi les valeurs d'utilisation de courant électrique de la pluralité de résumés bruts qui correspondent aux signatures d'apprentissage, les étiquettes comprenant des valeurs d'utilisation de courant électrique ; et
appliquer l'algorithme d'apprentissage automatique (518) aux signatures d'apprentissage et aux étiquettes correspondantes (516) afin de déterminer une relation entre les activités du dispositif électronique et l'utilisation de courant électrique utilisé pour générer le modèle de consommation de courant électrique (520).

4. Procédé selon la revendication 3, dans lequel la détermination d'une étiquette donnée associée à un résumé brut donné consiste en outre à :
extraire des valeurs de consommation de courant électrique du résumé brut donné ;
calculer une valeur de consommation de courant électrique moyenne en calculant la moyenne des valeurs de consommation de courant électrique sur la longueur du résumé brut donné ; et
affecter la valeur de consommation de courant électrique moyenne en tant qu'étiquette associée à la signature d'apprentissage correspondant au résumé brut donné.

5. Procédé selon l'une quelconque des revendications 1 à 4, dans lequel l'algorithme d'apprentissage automatique est l'un d'un algorithme à base d'arbre VP du voisin le plus proche, d'un algorithme de machine vectorielle de support, d'un algorithme d'arbre de décision, d'un algorithme de régression linéaire ou logistique, d'un arbre de décision renforcée et d'un réseau neuronal.

6. Dispositif électronique (100) comprenant :
une pluralité de sous-systèmes destinés à remplir diverses fonctions (106 à 124) ;
un système d'exploitation destiné à permettre l'exécution d'applications logicielles (134) et le fonctionnement des sous-systèmes et à consigner l'activité du dispositif électronique dans des données de journaux ;
un processeur (102) qui commande le fonctionnement du dispositif électronique, le processeur étant configuré pour estimer la consommation réelle ou simulée de courant électrique du dispositif électronique par les étapes consistant à : obtenir des données de journaux comprenant un enregistrement d'au moins certaines des activités du dispositif électronique pendant une période de temps sélectionnée, les activités étant des événements de noyau réels ou simulés du dispositif électronique ; le processeur étant configuré pour analyser syntaxiquement les données de journaux afin d'obtenir une pluralité de résumés constitutifs, chaque résumé constitutif comprenant une partie desdites données de journaux pendant un intervalle de temps ; le processeur étant configuré pour estimer des valeurs de consommation de courant électrique pour la pluralité de résumés constitutifs sur la base de signatures constitutives des résumés constitutifs, d'un modèle de consommation de courant électrique, où le modèle de consommation de courant électrique peut être généré par une technique d'apprentissage automatique sur la base d'une pluralité de signatures d'apprentissage, le modèle de consommation de courant étant utilisé afin d'estimer des valeurs de consommation de courant électrique par détermination d'une ressemblance entre ladite pluralité de signatures d'apprentissage dans un ensemble d'apprentissage et les signatures constitutives afin de déterminer une valeur correspondante de la consommation de courant électrique pour chacun des résumés constitutifs ; et le processeur étant configuré pour traiter les valeurs de consommation de courant électrique estimées afin d'estimer des données de consommation de courant électrique pour le dispositif électronique.

7. Dispositif selon la revendication 6, configuré pour estimer la valeur de consommation de courant électrique pour un résumé constitutif donné, dans lequel l'estimation comprend :
une détermination de la signature constitutive du résumé constitutif donné ;
une utilisation de la technique d'apprentissage automatique pour localiser une signature d'apprentissage parmi les données de l'ensemble d'apprentissage qui correspond à la signature constitutive, la correspondance ayant pour base la ressemblance ; et
un réglage de la valeur de consommation de courant électrique estimée à une étiquette de consommation de courant électrique qui est associée à la signature d'apprentissage localisée dans le modèle de consommation de courant électrique.

8. Dispositif selon l'une quelconque des revendications 6 et 7, configuré pour estimer le modèle de consommation de courant électrique, configuré en outre pour :
obtenir (502) des données de journaux d'apprentissage (400) pendant l'exécution d'une pluralité d'activités sur le dispositif électronique, les activités étant des événements de noyau d'un système d'exploitation du dispositif électronique et les données de journaux d'apprentissage comprennent des données de journaux d'événements de noyau et des données de journaux de courant électrique ;
synchroniser (504) les données de journaux de courant électrique avec les données de journaux d'événements de noyau lorsque des informations de temporisation contenues dans les données de journaux de courant électrique et les données de journaux d'événements de noyau ne sont pas synchronisées les unes par rapport aux autres ;
fusionner (506) les données de journaux d'événements de noyau avec les données de journaux de courant électrique pour former des données de journaux d'événements de noyau-courant ;
analyser syntaxiquement (508) les données de journaux d'événements de noyau-courant afin d'obtenir une pluralité de résumés bruts qui comprennent chacun des parties des données de journaux d'apprentissage ;
déterminer (510) des signatures d'apprentissage pour la pluralité de résumés bruts après avoir éliminé (512) les valeurs de journaux de courant électrique de la pluralité de résumés bruts ;
déterminer (514) des étiquettes pour les signatures d'apprentissage parmi les valeurs d'utilisation de courant électrique de la pluralité de résumés bruts qui correspondent aux signatures d'apprentissage, les étiquettes comprenant des valeurs d'utilisation de courant électrique ; et
appliquer l'algorithme d'apprentissage automatique (518) aux signatures d'apprentissage et aux étiquettes correspondantes (516) afin de déterminer une relation entre les activités du dispositif électronique et l'utilisation de courant électrique utilisé pour générer le modèle de consommation de courant électrique (520).

9. Dispositif selon la revendication 8, configuré pour déterminer une étiquette donnée associée à un résumé brut donné, configuré en outre pour :
extraire des valeurs de consommation de courant électrique du résumé brut donné ;
calculer une valeur de consommation de courant électrique moyenne en calculant la moyenne des valeurs de consommation de courant électrique sur la longueur du résumé brut donné ; et
attribuer la valeur de consommation de courant électrique moyenne en tant qu'étiquette associée à la signature d'apprentissage correspondant au résumé brut donné.

10. Dispositif selon l'une quelconque des revendications 6 à 9, dans lequel l'algorithme d'apprentissage automatique est l'un d'un algorithme à base d'arbre VP du voisin le plus proche, d'un algorithme de machine vectorielle de support, d'un algorithme d'arbre de décision, d'un algorithme de régression linéaire ou logistique, d'un arbre de décision renforcée et d'un réseau neuronal.

11. Support lisible par ordinateur (106, 108) comprenant une pluralité d'instructions exécutables sur un microprocesseur (102) d'un dispositif électronique (100) destiné à adapter le dispositif électronique à la mise en oeuvre d'un procédé selon l'une quelconque des revendications 1 à 5.
